# EUROPÄISCHE PATENTSCHRIFT

(11) **EP 3 137 366 B1**
(45) Veröffentlichungstag und Bekanntmachung des Hinweises auf die Patenterteilung: **15.08.2018**
(21) Anmeldenummer: 15721623.5
(22) Anmeldetag: 29.04.2015
(51) Int. Cl.: B62D 25/02

(54) **SEITLICHER EINSTIEGSBEREICH FÜR PERSONENKRAFTWAGEN**
LATERAL ENTRY ZONE FOR AUTOMOBILES
ZONE D'ACCÈS LATÉRAL POUR VOITURE DE TOURISME

(30) Priorität: 30.04.2014 DE 102014208121
(43) Veröffentlichungstag der Anmeldung: 08.03.2017
(73) Patentinhaber: Bayerische Motoren Werke Aktiengesellschaft, 80809 München (DE)
(72) Erfinder: PLAUM, Michael, 85244 Roehrmoos (DE)
(86) Internationale Anmeldenummer: PCT/EP2015/059272
(87) Internationale Veröffentlichungsnummer: WO 2015/165929

(56) Entgegenhaltungen:
- EP-A1- 2 196 382
- US-A- 2 114 344

## Beschreibung

Diese Erfindung betrifft einen seitlichen Einstiegsbereich für einen Personenkraftwagen mit einem Wagenboden. Der Einstiegsbereich weist mehrere Türöffnungen auf, die wiederum jeweils einen Türflansch aufweisen, der zur Anlage einer jeweiligen Fahrzeugtür vorgesehen ist. Eine Gesamtform der Türflansche ist zumindest in einem unteren Abschnitt, der wenigstens näherungsweise parallel zu dem Wagenboden verläuft, vom Wagenäußeren aus gesehen eine konvexe Form, wobei ein vorderer Endabschnitt des vordersten Türflansches in seinem unteren Abschnitt weiter in Richtung des Wageninneren angeordnet ist als eine Stelle in einem unteren Abschnitt des vordersten Türflanschs, die weiter hinten an dem Wagen als der vordere Endabschnitt angeordnet ist.

Seit Langem sind Personenkraftwagen bekannt, deren Einstiegsbereich eine oder mehrere Türöffnungen aufweist, die an ihrem Innenrand jeweils durch einen Türflansch zur Anlage einer Fahrzeugtür begrenzt sind. Insbesondere aus Gründen der einfachen Herstellung einer Türunterkante, die an einen unteren Abschnitt eines solchen Türflansches angelegt wird, waren bisher die Türunterkante und ein entsprechender Abschnitt des Türflansches als ebene Fläche ausgebildet. In einer Fahrzeugtür ist typischerweise im oberen Bereich ein Fenster angeordnet, das sich im oberen Bereich der Karosserie befindet. Aus Designgründen oder aus aerodynamischen Gründen kann es wünschenswert sein, den Verlauf der vorderen Seitenfenster in Fahrtrichtung des Fahrzeugs, also in Richtung eines Frontbereichs, zum Wageninneren hin verlaufend, häufig konvex gekrümmt, zu gestalten. Daraus ergibt sich ein Formverlauf einer Türvorderkante und des zugehörigen Türflansches beginnend bei einer wie beschrieben verlaufenden Scheibe bis zu der Türunterkante, die bei geschlossener Tür an einem ebenen Türflansch nach dem Stand der Technik anliegt, der im Türfangbereich bzw. Türscharnierbereich schon auf der Höhe eines Türschlosses deutlich in Richtung des Wageninneren verläuft. Diese Form führt dazu, dass im Bereich einer A-Säule und im Türfangbereich beengte Platzverhältnisse herrschen. Insbesondere im Türfangbereich, in dem typischerweise ein Türfangband angeordnet ist, kann es dann schwierig sein, alle erforderlichen Komponenten anzuordnen. Üblicherweise erstreckt sich der Abschnitt des Türflansches, in dem dieser einschließlich eines unteren Abschnitts zur Anlage der Türunterkante eben ist, bis etwa in die Höhe des Türschlosses.

US 2 114 344 A offenbart einen seitlichen Einstiegsbereich für einen Personenkraftwagen mit einem Wagenboden. Der Einstiegsbereich weist zwei Türöffnungen auf, die wiederum jeweils einen Türflansch aufweisen, der zur Anlage einer jeweiligen Fahrzeugtür vorgesehen ist. Eine Gesamtform der Türflansche ist in einem unteren Abschnitt, der wenigstens näherungsweise parallel zu dem Wagenboden verläuft, vom Wagenäußeren aus gesehen eine konvexe Form. Ein vorderer Endabschnitt des vordersten Türflansches ist in seinem unteren Abschnitt weiter in Richtung des Wageninneren angeordnet als eine Stelle in einem unteren Abschnitt des vordersten Türflanschs, die weiter hinten an dem Wagen als der vordere Endabschnitt angeordnet ist.

EP 2 196 382 A1 betrifft einen seitlichen Einstiegsbereich für einen Personenkraftwagen mit einem Wagenboden. Der Einstiegsbereich weist zwei Türöffnungen auf. Ein Türschweller des Einstiegsbereichs ist vom Wagenäußeren aus gesehen konvex ausgebildet.

Aufgabe der Erfindung ist es daher, einen Einstiegsbereich anzugeben, der die vorstehend genannten Probleme überwindet.

Gegenstand der Erfindung ist ein Einstiegsbereich für einen Personenkraftwagen, bei dem eine Gesamtform der Türflansche des Einstiegsbereichs in einem unteren Abschnitt, der wenigstens näherungsweise zu dem Wagenboden parallel verläuft, von einem Wagenäußeren aus gesehen eine konvexe Form hat, während die Form vom Wageninneren aus konkav erscheint. Der Türflansch wölbt sich somit in dem unteren Abschnitt in seiner Mitte aus dem Fahrzeug heraus. Die Gesamtform der Türflansche bezieht sich auf eine gedacht zusammenhängende Fläche, in der die Flächen der mehreren Türflansche liegen.

Erfindungsgemäß ist ein vorderer Endabschnitt des vordersten Türflanschs in seinem unteren Abschnitt weiter in Richtung des Wageninneren angeordnet als eine Stelle in einem unteren Abschnitt des vordersten Türflanschs, die weiter hinten an dem Wagen als der vordere Endabschnitt angeordnet ist. Zudem ist ein hinterer Endabschnitt in dem unteren Abschnitt des hintersten Türflanschs weiter in Richtung des Fahrzeuginneren angeordnet ist als eine Stelle im unteren Abschnitt des hintersten Türflanschs, die weiter vorne an dem Wagen als der hintere Endabschnitt angeordnet ist.

Die Gesamtform der Türflansche ist demnach so ausgebildet und die Türflansche sind so angeordnet, dass deren in Fahrtrichtung vorderster Bereich bzw. Endabschnitt, insbesondere die A-Säule des Fahrzeugs, weiter im Inneren des Fahrzeugs angeordnet ist als ein Mittelbereich der Gesamtform der Türflansche. Auf diese Weise ergibt sich, dass zusätzlich zu der konvexen Form zumindest im unteren Abschnitt des vordersten Türflanschs bzw. der Tür ein vorderer Abschnitt des Türflanschs bzw. die A-Säule weiter ins Wageninnere gerückt ist als zumindest ein mittlerer Teil des unteren Abschnitts des vordersten Türflanschs oder ein unterer Abschnitt des vordersten Türflanschs an der B-Säule. Dies kommt den oben genannten aerodynamischen bzw. Designwünschen entgegen. Zudem wird durch eine solche Konstruktion ermöglicht, eine hintere Seitenscheibe in einer Tür, die zu dem hintersten Türflansch gehört, in Richtung des Hecks des Fahrzeugs weiter in Richtung des Fahrzeugs gebogen sein kann, etwa aus aerodynamischen Überlegungen heraus, ohne dass sich Bauraumprobleme an deren zum Heck gerichteter Seite ergeben, insbesondere im Bereich des Türschlosses, oder bei einer hinten angeschlagenen Tür, in deren Türfangbereich. Die Einwölbung der Seitenscheibe in Richtung des Hecks zum Wageninneren hin bietet aerodynamische Vorteile, da so das Heck schlanker ausgeführt sein kann. Außerdem kann diese Form aus Designgründen erwünscht sein. Wäre nämlich der hinterste Abschnitt des Türflansches nicht weiter zum Wageninneren angeordnet, so müsste die Fahrzeugtür und deren Türflansch oder die daran anliegende Türblattfläche ausgehend von einer Stelle im unteren Abschnitt, die dann relativ weit außen am Fahrzeug läge, in Richtung der Seitenscheibe verstärkt zum Inneren des Fahrzeugs verlaufen, was den Bauraum an der Hinterkante der Tür einengen würde.

Die Unteransprüche zeigen bevorzugte Weiterbildungen der Erfindung.

In einer Ausführungsform umfasst eine konvexe Gesamtform von mehreren Türflanschen den Fall, dass einzelne Türflansche in ihren unteren Abschnitten für sich gesehen eben sind, wobei diese jedoch so zueinander in einem Winkel ausgerichtet sind, dass sich die Gesamtform der Türflansche aus dem Wagen herauswölbt. Somit ist in diesem Fall ein Winkel zwischen den einzelnen Türflanschen im Inneren des Wagens kleiner als 180° bzw. auf der Außenseite des Wagens größer als 180°.

In einer Alternative zu der Form der Türflansche, die in ihren unteren Abschnitten eben ist, wird in einer weiteren Ausführungsform vorgeschlagen, dass wenigstens einer der Türflansche in seinem unteren Abschnitt nach außen gewölbt ausgeführt ist. Es ergibt sich auch dann eine konvexe Gesamtform im Sinne der Erfindung Dabei kann nicht nur die Gesamtform der Türflansche in deren unterem Abschnitt konvex gestaltet sein, sondern auch wenigstens die Form eines einzelnen Türflansches in dessen unterem Abschnitt. Diese Krümmung kann als Zylinderoberfläche oder als gekrümmte Freiformfläche ausgestaltet sein. Mit einem solchen gekrümmten Türflansch ist neben der Schaffung von Bauraum im Türfangbereich auch mehr Gestaltungsfreiheit im Bereich der Einstiegsschwelle verbunden.

In einer weiteren Ausführungsform reicht die konvexe Ausgestaltung der Gesamtform der Türflansche bis etwa in die Höhe eines Türschlosses. Dadurch ergibt sich eine gleichmäßige Ausrichtung des Türflansches ohne abrupte Übergänge zu einer Ebene oder dergleichen. Dies hat aufgrund des gleichmäßigen Formverlaufs Vorteile für die Festigkeit sowie außerdem für die Designfreiheit im Einstiegsbereich.

In einer weiteren Ausführungsform weist eine Form eines unteren Abschnittes eines der Türflansche von oben gesehen zumindest angenähert dieselbe Form auf, wie eine Seitenscheibe der Tür, die zu dem Türflansch gehört, aus derselben Perspektive. Dies führt zu einer harmonischen Linienführung in der Tür, die dem Türflansch zugeordnet ist, was zudem mit einer günstigen Führung von Kräften durch die Tür einhergeht. Dabei kann die Form der Seitenscheibe gegenüber der Form des unteren Abschnitts des Türflansches auch etwas vergrößert oder besonders bevorzugt verkleinert sein.

In einer weiteren Ausführungsform wird vorgeschlagen, dass der untere Abschnitt eines Türflansches zumindest angenähert parallel zu einem äußeren Rand des Wagenbodens verläuft. Der äußere Rand des Wagenbodens in der Nähe des Türflansches ist typischerweise eine Außenwand eines Schwellers. Durch eine parallele Ausgestaltung der Form des unteren Abschnitts des Türflansches zu der Außenwand des Schwellers ergibt sich vorzugsweise eine gleichmäßige Breite der Schwelleroberseite bis zu dem Türflansch. Dies kann neben designerischen Vorteilen auch den Vorteil einer in Fahrzeuglängsrichtung gleichmäßigen Festigkeit des Schwelleraußenbereichs haben, welcher sich trotz einer konvexen Form desselben ergeben kann.

In einem weiteren Aspekt der Erfindung wird ein Personenkraftwagen vorgeschlagen, der einen Einstiegsbereich gemäß einer der vorstehend beschriebenen Ausführungsformen aufweist.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Seitenansicht eines Seitenteils eines Personenkraftwagens mit zwei Türöffnungen mit jeweiligen Türflanschen und
- Figur 2: eine schematische Draufsicht auf einen Einstiegsbereich in einer Ausführungsform der Erfindung, und
- Figur 3: eine perspektivische Ansicht eines Seitenteils eines Personenkraftwagens.

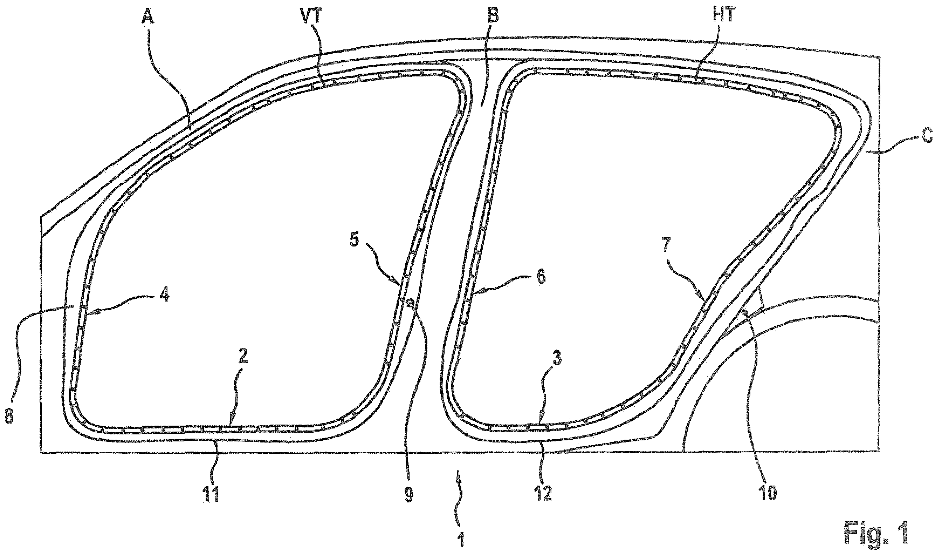

Figur 1 zeigt eine Ansicht eines Seitenteils 1 eines Personenkraftwagens von außen, welches einen Einstiegsbereich mit zwei Türöffnungen umfasst. Der zur Front des Fahrzeugs gerichtete Teil der Seitenwand ist in Figur 1 auf der linken Seite dargestellt. Jede der Einstiegsöffnungen ist von einem Einstiegsflansch gesäumt, wobei der vordere Einstiegsflansch einen vorderen Abschnitt 4, einen unteren Abschnitt 2 und einen hinteren Abschnitt 5 umfasst und der hintere Einstiegsflansch einen vorderen Abschnitt 6, einen unteren Abschnitt 3 und einen hinteren Abschnitt 7 umfasst. Vor dem vorderen Abschnitt 4 des vorderen Türflansches befindet sich ein Türfangbereich 8. An der B-Säule B ist eine Aufnahme 9 für einen feststehenden Teil eines Türschlosses angeordnet. Eine entsprechende Mulde 10 für einen feststehenden Teil eines Türschlusses ist nahe dem hinteren Abschnitt 7 des hinteren Türflansches angeordnet. Unter den unteren Abschnitten 2 bzw. 3 des vorderen bzw. des hinteren Türflansches VT, HT schließt sich nach unten ein Schwellerbereich 11 bzw. 12 an. Die nicht dargestellten Seitenscheiben der den Türflanschen VT, HT zugeordneten Türen erstrecken sich jeweils im oberen Bereich zwischen der A-Säule A und der B-Säule B bzw. zwischen der B-Säule B und der C-Säule C. Die Türflansche VT und HT haben nach dem Stand der Technik im Bereich der Seitenscheiben typischerweise eine zum Fahrzeugäußeren hin gewölbte Form, während insbesondere im unteren Bereich 2, 3 der Türflansche VT und HT eine Türflanschebene jeweils eben ausgebildet ist. Erfindungsgemäß wird vorgesehen, die Gesamtheit der Form der beiden Türflansche konvex zur Außenseite hin zu gestalten. Dies ist in der Seitenansicht aufgrund der Perspektive in Figur 1 nicht zu erkennen.

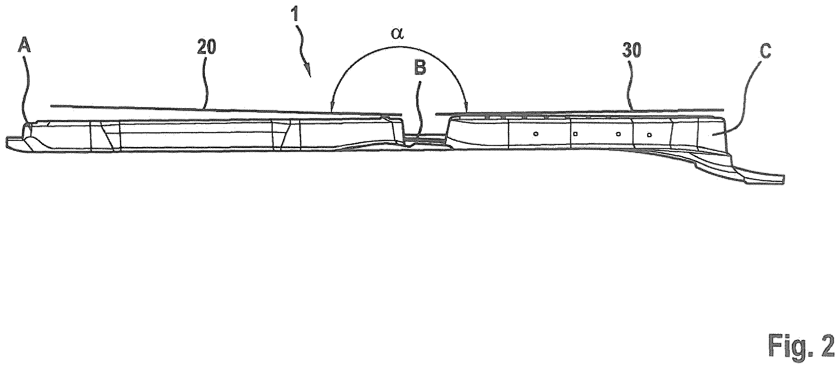

Figur 2 zeigt eine Draufsicht auf den Einstiegsbereich 1 aus Figur 1. In Figur 2 ist die erfindungsgemäße Ausgestaltung der unteren Abschnitte 20 und 30 der Türflansche VT bzw. HT schematisch eingezeichnet. Die schematische Darstellung stimmt nicht mit der gegenständlichen Darstellung der Draufsicht des Seitenteils 1 überein, jedoch kann sich ein Fachmann leicht vorstellen, dass das Seitenteil 1 derart geformt ist, dass die in dem Seitenteil 1 befindlichen unteren Abschnitte der Türflansche mit den erfindungsgemäß vorgegebenen Positionslinien 20 und 30 zusammenfallen. Bei den Vorgabelinien 20 und 30 handelt es sich um gerade Linien, so dass dementsprechend auch die unteren Abschnitte des Türflansches gerade bzw. auf einer Ebene liegend ausgebildet sind. Die Vorgabelinien 20 und 30 weisen zueinander einen Winkel α in Richtung des Inneren des Fahrzeugs auf. Der Winkel α ist kleiner als 180°, womit einhergeht, dass ein auf der Wagenaußenseite liegender korrespondierender, nicht dargestellter Winkel größer als 180° ist. Auf diese Weise ergibt sich eine konvexe, zum Wagenäußeren hin vorstehende Gesamtform der beiden Türflansche VT und HT. Da ein Seitenteil 1 eines Personenkraftwagens üblicherweise im Vergleich zu seiner Dicke bzw. der Dicke des Türaufbaus lang ausgestaltet ist, reicht eine relativ kleine Auswölbung in Richtung des Fahrzeugäußeren aus, um im Türfangbereich der vorderen Tür erheblich Platz zu gewinnen und somit die Vorteile der Erfindung zu realisieren. Der Winkel α kann ein oder wenige Grad kleiner als 180° sein.

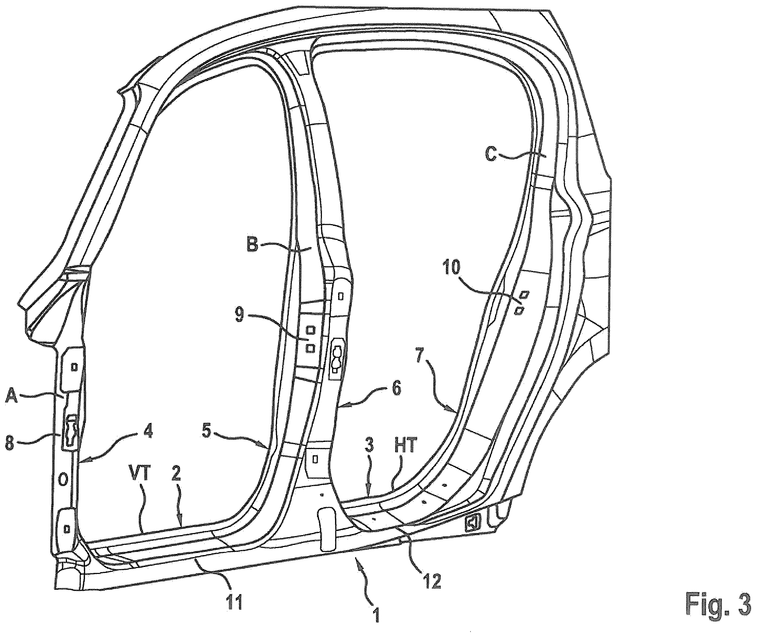

Figur 3 zeigt eine perspektivische Ansicht eines Seitenteils eines Personenkraftwagens von außen und schräg von vorn, wobei das Seitenteil 1 einen Einstiegsbereich mit zwei Türöffnungen umfasst. Der zur Front des Fahrzeugs gerichtete Teil der Seitenwand ist in der Figur 3 auf der linken Seite dargestellt. Es handelt sich um dasselbe Seitenteil, das auch in den Figuren 1 und 2 dargestellt ist. Gleiche Merkmale sind mit gleichen Bezugsziffern bezeichnet und werden nicht noch einmal gesondert beschrieben. Es sei auf die Ausführungen zu den Figuren 1 und 2 verwiesen.

Der vordere Abschnitt 4 des vorderen Türflansches und der vordere Abschnitt 6 des hinteren Türflansches sind jeweils aufgrund der Perspektive nicht zu sehen, so dass die Bezugsziffern 4 und 6 nur andeuten, wo sich deren Position befindet. Da die Gesamtform der Türflansche VT, HT in nur geringem Maße in Richtung des Fahrzeugäußeren konvex vorgewölbt ist, ist dies in der Figur 3 kaum erkennbar.

### Bezugszeichenliste:

- 1: Einstiegsbereich
- 2: Unterer Abschnitt des vorderen Türflansches
- 3: Unterer Abschnitt des hinteren Türflansches
- 4: Vorderer Abschnitt des vorderen Türflansches
- 5: Hinterer Abschnitt des vorderen Türflansches
- 6: Vorderer Abschnitt des hinteren Türflansches
- 7: Hinterer Abschnitt des hinteren Türflansches
- 8: Türfangbereich
- 9: Aufnahme für einen feststehenden Teil des Türschlosses der vorderen Tür
- 10: Aufnahme für einen feststehenden Teil des Türschlosses der hinteren Tür
- 11: Schweller im Bereich der vorderen Tür
- 12: Schweller im Bereich der hinteren Tür
- 20: Vorgabelinie für den unteren Abschnitt des vorderen Türflansches
- 30: Vorgabelinie für den unteren Abschnitt des hinteren Türflansches
- A: A-Säule
- B: B-Säule
- C: C-Säule
- VT: Vorderer Türflansch
- HT: Hinterer Türflansch

## Patentansprüche

1. Seitlicher Einstiegsbereich (1) für einen Personenkraftwagen mit einem Wagenboden, wobei der Einstiegsbereich (1) mehrere Türöffnungen mit jeweils einem Türflansch (VT, HT) zur Anlage einer jeweiligen Fahrzeugtür aufweist, wobei eine Gesamtform der Türflansche (VT, HT) zumindest in einem unteren Abschnitt (2, 3), der wenigstens näherungsweise parallel zu dem Wagenboden verläuft, vom Wagenäußeren aus gesehen eine konvexe Form ist, und wobei ein vorderer Endabschnitt des vordersten Türflansches (VT) in seinem unteren Abschnitt (2) weiter in Richtung des Wageninneren angeordnet ist als eine Stelle in einem unteren Abschnitt (2, 3) des vordersten Türflanschs (VT), die weiter hinten an dem Wagen als der vordere Endabschnitt angeordnet ist,
**dadurch gekennzeichnet, dass**
ein hinterer Endabschnitt in dem unteren Abschnitt (3) des hintersten Türflansches (HT) weiter in Richtung des Fahrzeuginneren angeordnet ist als eine Stelle im unteren Abschnitt (2, 3) des hintersten Türflanschs (HT), die weiter vorne an dem Wagen als der hintere Endabschnitt angeordnet ist.

2. Einstiegsbereich (1) nach Anspruch 1, **dadurch gekennzeichnet, dass** die Gesamtform der Türflansche (VT, HT) in einem unteren Abschnitt zwei ebene untere Abschnitte (2, 3) von zwei einzelnen Türflanschen (VT, HT) umfasst, wobei die ebenen unteren Abschnitte (2, 3) zueinander unter einem im Wagenäußeren gelegenen Winkel von mehr als 180° stehen.

3. Einstiegsbereich (1) nach Anspruch 1, **dadurch gekennzeichnet, dass** die Gesamtform der Türflansche (VT, HT) in einem unteren Abschnitt einen gekrümmten unteren Abschnitt (2, 3) von wenigstens einem einzelnen Türflansch (VT, HT) umfasst, wobei insbesondere die Krümmung die einer Zylinderoberfläche oder die einer Freiformfläche ist.

4. Einstiegsbereich (1) nach einem der vorangehenden Ansprüche, **dadurch gekennzeichnet, dass** die Gesamtform der Türflansche (VT, HT) von dem unteren Abschnitt (2, 3) bis zu einer Position eines Türschlosses (9, 10) in einer Draufsicht auf den Wagenboden eine konvexe Form mit Vorwölbung zum Wagenäußeren ist.

5. Einstiegsbereich (1) nach einem der vorangehenden Ansprüche, **dadurch gekennzeichnet, dass** ein Verlauf der Form eines unteren Abschnitts (2, 3) eines der Türflansche (VT, HT) in einer Draufsicht auf den Wagenboden wenigstens näherungsweise gleich einer Form einer Seitenscheibe der zu dem Türflansch (VT, HT) gehörenden Tür in derselben Ansicht ist.

6. Einstiegsbereich (1) nach einem der vorangehenden Ansprüche, **dadurch gekennzeichnet, dass** ein äußerer Rand des Wagenbodens wenigstens näherungsweise parallel zu dem unteren Abschnitt eines Türflansches (VT, HT) verläuft.

7. Personenkraftwagen mit einem Einstiegsbereich (1) nach einem der vorangehenden Ansprüche.

## Claims

1. A lateral entrance region (1) for a passenger car having a floor, wherein the entrance region (1) has a plurality of door openings with one door flange (VT, HT) in each case for a respective vehicle door to bear against, wherein an overall shape of the door flanges (VT, HT), at least in a lower portion (2, 3) which runs at least approximately parallel to the floor, viewed from the exterior of the car, is a convex shape, and wherein a front end portion of the foremost door flange (VT) in its lower portion (2) is arranged further in the direction of the interior of the car than a point in a lower portion (2, 3) of the foremost door flange (VT) which is arranged further to the rear on the car than the front end portion,
**characterised in that**
a rear end portion in the lower portion (3) of the rearmost door flange (HT) is arranged further in the direction of the interior of the car than a point in the lower portion (2, 3) of the rearmost door flange (HT) which is arranged further forward on the car than the rear end portion.

2. An entrance region (1) according to Claim 1, **characterised in that** the overall shape of the door flanges (VT, HT) in a lower portion comprises two flat lower portions (2, 3) of two individual door flanges (VT, HT), the flat lower portions (2, 3) being at an angle located in the exterior of the car of more than 180° relative to each other.

3. An entrance region (1) according to Claim 1, **characterised in that** the overall shape of the door flanges (VT, HT) in a lower portion comprises a curved lower portion (2, 3) of at least one individual door flange (VT, HT), with especially the curvature being that of a cylinder surface or that of a freeform surface.

4. An entrance region (1) according to one of the preceding claims, **characterised in that** the overall shape of the door flanges (VT, HT) from the lower portion (2, 3) up to a position of a door lock (9, 10) in a top view of the floor has a convex shape with a protrusion towards the exterior of the car.

5. An entrance region (1) according to one of the preceding claims, **characterised in that** a profile of the shape of a lower portion (2, 3) of one of the door flanges (VT, HT) in a top view of the floor is at least approximately identical to a shape of a side window of the door belonging to the door flange (VT, HT) in the same view.

6. An entrance region (1) according to one of the preceding claims, **characterised in that** an outer edge of the floor runs at least approximately parallel to the lower portion of a door flange (VT, HT).

7. A passenger car have an entrance region (1) according to one of the preceding claims.

## Revendications

1. Zone d'accès latérale (1) d'un véhicule de tourisme comprenant un plancher, la zone d'accès (1) comportant plusieurs ouvertures de porte ayant chacune une bride de porte (VT, HT) permettant l'installation d'une porte de véhicule respective, la forme globale des brides de porte (VT, HT), étant une forme convexe considérée à partir de l'extérieur du véhicule, au moins dans un segment inférieur (2, 3) s'étendant au moins essentiellement parallèlement au plancher du véhicule, et le segment d'extrémité avant de la bride de porte la plus en avant (VT) étant situé dans son segment inférieur (2) plus loin en direction de l'intérieur du véhicule qu'un emplacement du segment inférieur (2, 3) de la bride de porte la plus en avant (VT) qui est situé plus loin vers l'arrière sur le véhicule que le segment d'extrémité avant,
**caractérisée en ce que**
le segment d'extrémité arrière du segment inférieur (3) de la bride de porte la plus en arrière (HT) est situé plus loin en direction de l'intérieur du véhicule qu'un emplacement du segment inférieur (2, 3) de la bride de porte la plus en arrière (HT) qui est situé plus loin en avant sur le véhicule que le segment d'extrémité arrière.

2. Zone d'accès (1) conforme à la revendication 1,
**caractérisée en ce que**
la forme globale des brides de porte (VT, HT) comporte, dans un segment inférieur, deux segments inférieurs plans (2, 3) de deux brides de porte individuelles (VT, HT), les segments inférieurs plans (2, 3) définissant l'un par rapport à l'autre un angle situé vers l'extérieur du véhicule de plus de 180°.

3. Zone d'accès (1) conforme à la revendication 1,
**caractérisée en ce que**
la forme globale des brides de porte (VT, HT) comporte dans un segment inférieur comportent un segment inférieur cintré (2, 3) d'au moins une bride de porte individuelle (VT, HT) et en particulier le cintrage est une surface cylindrique ou une surface de formage libre.

4. Zone d'accès (1) conforme à l'une des revendications précédentes,
**caractérisée en ce que**
la forme globale des brides de porte (VT, HT) est du segment inférieur (2, 3) jusqu'à la position d'une serrure de porte (9, 10), en vue de dessus, sur le plancher du véhicule, une forme convexe avec un cintrage tourné vers l'extérieur du véhicule.

5. Zone d'accès (1) conforme à l'une des revendications précédentes,
**caractérisée en ce que**
les variations de la forme du segment inférieur (2, 3) de l'une des brides de porte (VT, HT) est, en vue de dessus, sur le plancher du véhicule, au moins essentiellement similaire à la forme d'une vitre latérale de la porte associée à cette porte (VT, HT) dans la même vue.

6. Zone d'accès (1) conforme à l'une des revendications précédentes,
**caractérisée en ce que**
le bord extérieur du plancher du véhicule s'étend au moins essentiellement parallèlement au segment inférieur d'une bride de porte (VT, HT).

7. Véhicule de tourisme ayant une zone d'accès (1) conforme à l'une des revendications précédentes.
